(19) Europäisches Patentamt
European Patent Office
Office européen des brevets

(11) **EP 4 576 556 A1**

(12) **EUROPEAN PATENT APPLICATION**

(43) Date of publication:
**25.06.2025 Bulletin 2025/26**

(21) Application number: **23218976.1**

(22) Date of filing: **21.12.2023**

(51) International Patent Classification (IPC):
*H02P 6/08* $^{(2016.01)}$   *B25J 9/00* $^{(2006.01)}$
*G05B 1/00* $^{(2006.01)}$

(52) Cooperative Patent Classification (CPC):
**H02P 6/08; B25J 9/1633**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **maxon international ag**
**6072 Sachseln (CH)**

(72) Inventors:
• **BUSSE-GRAWITZ, Max Erick**
  **6055 Alpnach Dorf (CH)**
• **HUTTER, Ursin**
  **8050 Zürich (CH)**
• **GÜNTHER, Fabian**
  **8050 Zürich (CH)**

(74) Representative: **Schenk, Markus et al**
**Schoppe, Zimmermann, Stöckeler Zinkler, Schenk & Partner mbB Patentanwälte**
**Radlkoferstrasse 2**
**81373 München (DE)**

(54) **MOTOR CONTROLLER**

(57) A force-based motor control is used in order to reduce the collision energy to deal with in case of collisions or shocks. That is, a basis, a force-based control is used: A set force obtained by correcting an externally controlled force by use of a correction force is subject to a limitation so as to obtain an effectively set force which is then subject to force-to-current conversion to determine a current to be applied onto the motor. The correction force is determined when using, in addition to a motor encoder signal of a motor encoder of the motor, a windup force signal formed and an effective correction force signal..

Fig. 1

EP 4 576 556 A1

**Description**

The present application is concerned with motor controlling.

For robots which are designed for unstructured environments, called service robots herein, collisions belong to the standard repertoire to deal with. While for industry robots, speed is substantially limited by the components and control strategies, the speed for service robots is substantially determined by the tolerable collision energy. For instance, a walking robot could walk at low speed or high speed, but depending thereon, it would more or less stomp due to the fact that the position of the floor is not exactly known. Moreover, service robots need to be prepared that objects, which lie on the ground, might not be detected by sensors of the robot, and lead to collisions of even higher collision energy. Thus, the walking speed of such robots would practically be limited by the collision energy resulting from such collisions to be expected. Robots which are too fast, are liable to cause damages to the objects or themselves, or could even destruct themselves due to such collisions. Basically, the damage or destruction is caused by the fact that much of the kinetic energy of the robot is transferred during a certain time interval, and the shorter this time interval, the larger the resulting force onto the robot resulting from the collision. There are different strategies in order to keep this force within acceptable limits:

1. Limiting the speed of the robot.
2. The use of lightweight design in the robot structure.
3. The use of motors with low inertia.
4. The use of structures and gears with high overload capacity.
5. The use of series elastic elements.

The above-identified complementary strategies are well-proven, but partially in conflict with each other: For instance, the use of structures with high overload capability contravenes the aim of designing a robot of lightweight design. This conflict is difficult to solve.

Accordingly, there is a need for a concept which accompanies or alleviates the above-identified strategies and enables a motor driven object or system such as a robot to deal with unexpected or unavoidable collisions more efficiently, easing compromises regarding performance, structural stability, elasticity and weight of the robot.

Thus, it is the object of the present invention to provide a concept which allows for motor driven objects to cope with unexpected or unavoidable collisions more efficiently, and this object is achieved by the motor controller and method for controlling of the claims of the present application.

An idea underlying the present application is that a force-based motor control may be used in order to reduce the collision energy to deal with in case of collisions or shocks. That is, a basis, a force-based control is used: A set force obtained by correcting an externally controlled force by use of a correction force is subject to a limitation - selected to account for, for example, physical limitations of motor, gear and motor controller - so as to obtain an effectively set force which is then subject to force-to-current conversion to determine a current to be applied onto the motor. According to the inventors' finding, the correction force may be determined when using, in addition to a motor encoder signal of a motor encoder of the motor, a windup force signal formed and an effective correction force signal. The effective correction force signal may be formed by a linear combination of two or more of the externally controlled force, the correction force, the set force and the effectively set force and is indicative of an force correction caused by the motor controller. The windup force signal may be formed by a linear combination of the effectively set force with one or more of the externally controlled force, the correction force, and the set force. The underlying thoughts are as follows: Based on the motor encoder signal, collisions and the associated sudden change in a trend of the motor encoder signal may be detected quickly. The windup force signal enables to avoid instabilities of the motor control otherwise caused by the limitation of the correction force. The effective correction force signal, in turn, enables to analyse the effective force correction recursively and directly and may assist in distinguishing between intended changes of the motor encoder signal's trend and unintended ones. That is, in other words, the inventive motor control is force-based in that the internally processed parameters relate to forces, namely the externally controlled force, the set force, the effectively set force, the windup force signal and the effective correction force signal and, last but not least, the correction force, and alleviates the overall burden in order to attain shock or collision resistance, such as the burden with respect to the design of the motor, gear and/or other components of a motorized structure into which the motor control is integrated.

According to an embodiment of the present application, the motor is a rotational electric motor, e.g. an electric motor configured to convert electrical energy provided by electrical current into force in the form of a torque applied on the motor's shaft, and the forces are torques. The motorized structure may then, for instance, be a leg or arm such as the leg or arm of a robot.

Subjecting a template of newest - or most recent - sample values of the motor encoded angle signal, the windup force signal and the effective correction force signal to a scalar function may be used to determine the correction force. The scalar function may be formed by a linear function or a non-linear function. In particular, the scalar function may be embodied by a machine learned predictor. For instance, a neural network may be used. For training the machine learned predictor or neural network, a cost function may be used which depends on one or more of a measure for uncompensated collision energy, a measure for temporal duration until the correction force vanishes, a measure for current noise increase imposed by the correction force, and a measure of sensitivity against variations against mechanical design parameters.

In accordance with an embodiment, the determination of the correction force is split-up into three branches, each being fed by one of the three inputs, namely motor encoder signal, windup force signal and effective correction force signal. In these separate branches or modules, the motor encoder signal is used to obtain a first correction force contribution signal indicative of an acceleration, the effective correction force signal is used to obtain a second correction force contribution signal, and the windup force signal is used so as to obtain an instability-avoidance signal, wherein the first correction force contribution signal, the second correction force contribution signal and the instability-avoidance signal are combined to obtain the correction force. The individual branches or modules may, again, use linear or non-linear mappings. For instance, a neural network may be used in each of these branches/modules.

In accordance with an embodiment, the motor encoder signal is filtered using a first filter so as to obtain the first correction force contribution signal, the windup force signal is filtered using a second filter so as to obtain the second correction force contribution signal, and the effective correction force signal is filtered using a third filter so as to obtain the instability-avoidance signal. The filters may be FIR filters. By this measure, the implementation and training efforts are reduced, while still leading to a sufficient shock and/or collision reduction.

According to an embodiment, the filter kernel sizes of the filters are different, wherein the first filter's kernel size exceeds the kernel size of the second and third filters. By this measure, it is possible to realize a damping by forming a tail at the end of the first FIR filter's impulse response for stabilizing instabilities which are inherent for a straightforward inertia compensation. Moreover, this enables rendering the motor control short-term dissipative, while retaining long-term speed-invariance. Naturally, such size relationship may also advantageously be used in case of forming the individual branches or modules in a manner other than using FIR filters, i.e., a template of newest sample values of the motor encoder signal which feed a scalar function of the first branch, may contain more sample values and/or form a longer time interval than corresponding templates of newest sample values of the windup force signal and the effective correction force signal, respectively.

In accordance with an embodiment, the motor encoder signal is filtered using an FIR filter which is designed so that a predetermined FIR filter tap's coefficient of the first filter equals a negative sum over all coefficients of the first filter except the predetermined FIR filter tap's coefficient so that the sum over all coefficient of the first filter is zero or an absolute of the sum over all coefficient of the first filter is smaller than 1% of an absolute of the, in magnitude, greatest coefficient among the coefficients of the first filter, and a first moment of the coefficients of the first filter about the predetermined FIR filter tap is zero or an absolute of the first moment of the coefficients of the first filter about the predetermined FIR filter tap is smaller than 1% of an absolute of the, in magnitude, greatest coefficient among the coefficients of the first filter. This ensures the first correction force contribution signal is position and speed invariant and enables that this first filter may be made an FIR filter whose coefficients need not to be subject to any training, while stability may nevertheless be strengthened. The predetermined FIR filter tap may correspond to the zero-delay filter tab. Additionally, the one-tap-delay FIR filter tap's coefficient may be set so as to negatively compensate the first moment of the coefficients of the first filter, except the one-tap-delay FIR filter tap's coefficient, about the predetermined FIR filter tab. The two-tap-delay FIR filter tap's coefficient and the zero-delay FIR filter tap's coefficient may be of equal sign and opposite in sign relative to the one-tap-delay FIR filter tap's coefficient so as to substantially yield an impulse response largely proportional to a second derivative. An absolute of a sum over the two-tap-delay FIR filter tap's coefficient, the zero-delay FIR filter tap's coefficient and the one-tap-delay FIR filter tap's coefficient may be smaller than 10% of an absolute of the one-tap-delay FIR filter tap's coefficient. A sum of absolutes of coefficients of the first filter, other than the two-tap-delay FIR filter tap's coefficient, the one-tap-delay FIR filter tap's coefficient and the zero-delay FIR filter tap's coefficient, is smaller than 10% of an absolute of the one-tap-delay FIR filter tap's coefficient. That is, these other coefficients form a sort of "tail" of the FIR filter impulse response function and may correspond to a constant function or a function decaying towards the trailing end of the FIR filter kernel, such as forming a linear function, a quadratic function or an exponential function or any other preferably monotonic or strictly monotonic function.

According to an embodiment, the aforementioned combination of the first correction force contribution signal, the second correction force contribution signal and the instability-avoidance signal may be embodied by a summation over these signals. This summation renders any learning of the branches'/modules' functions easier such as the those for the second and third branches/modules in case of using the FIR filter implementation discussed above with respect to the motor encoder signal. For instance, it might enable the use of a gradient descent method for training.

Further details of the present application are the subject of dependent claims wherein preferred embodiments of the present application are described below with respect to the figures, among which:

Fig. 1    shows a block diagram of an embodiment of a motor controller and an example for its embedding into an example for a motorized system;

Fig. 2 shows graphs of FIR filter coefficients for FIR filters which, according to an embodiment, are used in order to implement the correction force determiner;

Fig. 3a-3h show graphs showing certain signals occurring in an exemplary collision situation in the embodiment of Fig. 1 according to a concrete simulation in order to illustrate the concept and advantages of the present application.

Equal or equivalent elements or elements with equal or equivalent functionality are denoted in the following description by equal or equivalent reference numerals even if occurring in different figures.

In the following description, a plurality of details is set forth to provide a more thorough explanation of embodiments of the present invention. However, it will be apparent to those skilled in the art that embodiments of the present invention may be practiced without these specific details. In other instances, well-known structures and devices are shown in block diagram form, rather than in detail, in order to avoid obscuring embodiments of the present invention. In addition, features of the different embodiments described herein after may be combined with each other, unless specifically noted otherwise.

The discussion brought forward in the introductory portion of the specification shall briefly be resumed. In particular, the disadvantages of the strategies discussed in the introductory portion are:

1. Limited speed, which, in turn, limits the usability of the robot.
2. Lightweight design within the robot structure makes sense, but is limited due to item 4.
3. The usage of motors with limited inertia is very helpful, but there are technical limits.
4. The usage of structures and gears with high overload capability tends to increase costs as well as the weight of the overall structure, e.g., the robot.
5. The usage of series elastic elements also comes with associated costs: Costs and volume of such series elastic elements are proportional to the energy to be absorbed. Further, such elements tend to lead to a lower control accuracy.

The above thoughts led to embodiments of the present application according to which the collision energy is limited by a compensation of the motor inertia. Generally, this requires an observation of a second derivative of the motor position such as the motor angle in case of a rotational motor. In robotics, such concepts are known. See, for instance, [1]. Known algorithms are, however, either slow or unstable. The ETCH algorithm of [1] is useful to alleviate forces caused by patients, but by far too slow for real collisions.

In accordance with the embodiments described below, the problem of more efficiently achieving a shock/collision resistance is achieved by the usage of a force/torque-based motor control where the correction force/torque is determined based on, in addition to the motor encoder signal, a windup force signal formed and an effective correction force signal. In effect, the correction force determination operates in a recursive manner as the correction force for a next sample of the externally controlled force is determined based on one or more most recent samples of, inter alia, the effectively set force which, in turn, merges from the correction force, and determined based on most recent motor encoder signal readings/samples which, via the dependency of the effectively set force is influenced by the correction force, too.

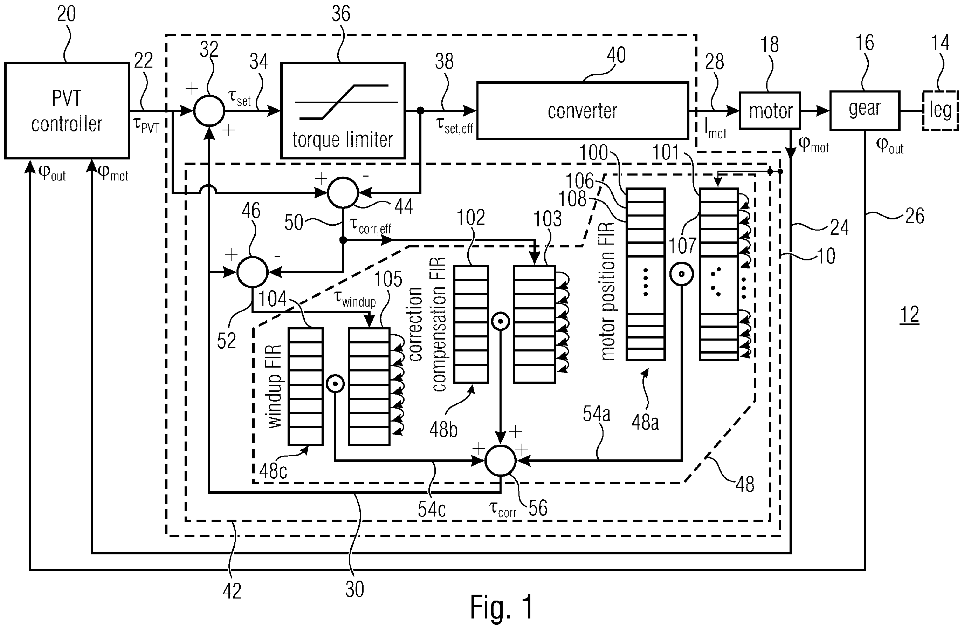

Fig. 1 shows an embodiment for a motor controller 10 in an example where this motor controller 10 is embedded into a motorized system 12, but it is explicitly noted that all details of Fig. 1 with respect to elements of the motorized system 12 external to the motor controller 10 are optional for the motor controller 10 and that the motor controller 10 may alternatively be used with respect to, or built into a different motorized system 12. Additionally, although the motorized system 12 is depicted in Fig. 1 as comprising a leg 14 motorized via a gear 16 by a motor 18, this shall not be interpreted as limiting the usability of the motor controller 10 of Fig. 1. Rather, the motor controller 10 may alternatively be used in other motorized systems 12 such as, for instance, where some other object is moved by motor 18 such as an arm or the like. For instance, the motorized system 12 may be a robot.

Further, the embodiment described in the following assumes that the motor 18 is a rotational motor so that the motor encoder signal corresponds to angular positions of a shaft of motor 18, but it is pointed out that all the details described with respect to Fig. 1 may readily be transferred onto a linear motion actuator in case of which the motor encoder signal would relate to a linear position and the torques mentioned in the description of Fig. 1 would be linear forces.

To finish the description of the "environment" or outside of the motor controller 10 of Fig. 1, as can be seen in the figure, system 12 further comprises a position-velocity-torque (PVT) controller 20 which, based on a certain control algorithm which, for instance, analyses one or more sensor signals, outputs a torque signal $\tau_{PVT}$ 22 to motor controller 10. In addition to the just-mentioned optional sensor signals, PVT controller 20 uses the motor encoder signal 24 which is indicative of the motor's 18 rotational position $\varphi_{mot}$ as well as a gear position signal 26 being indicative of a rotational position $\varphi_{out}$ of the gear 16 or leg 14, respectively. Based on the inbound signals, the controller 20 determines the externally controlled torque $\tau_{PVT}$ 22.

It should be noted that controller 20, which is entrusted with higher level control tasks, may operate at a lower operational rate than the sample rate at which motor controller 10 operates. To be more precise, while motor controller 10 might operate at the motor encoder signal's 24 sample rate, controller 20 may operate at a rate which is, for instance, even lower than a fifth or even a tenth of the sample rate of signal 24. The sample rate of the gear position signal 26 may also be lower than the sample rate of signal 24 and may, for instance, coincide with, or be larger than, the processing rate of controller 20.

The motor controller 10 is for controlling motor 18 by appropriately determining a current $I_{mot}$ 28 which is to be applied to motor 18, namely appropriately determined based on the externally controlled torque $\tau_{PVT}$. Motor 18 moves, via gear 16, and electrically powered according to the just-mentioned current 28, leg 14. As just-mentioned, both motor 18 and gear 16 output position signals 24 and 26, among which the motor encoder signal 24 is a further input for motor controller 10.

Based on current samples of the externally controlled torque 22 and the motor encoder signal 24 as well as a current sample of an internally determined correction torque $\tau_{corr}$, 30, a motor controller 10 determines current 28 based on which motor 18 reaches its position measured with the next sample of the motor encoder signal 24 and so forth. As already described above, the externally controlled torque 22 may change at a lower rate due to the lower processing rate of controller 20.

The internal structure of the motor controller 10 of Fig. 1 is as follows. A corrector 32 corrects the externally controlled torque 22 by use of the correction torque 30, wherein, for instance, corrector 32 may simply add the correction torque 30 to the externally controlled torque 22. Naturally, a subtraction might be used as well. Corrector 32 obtains, as output, a set torque 34, $\tau_{set}$, which is fed into a torque limiter 36 which subjects the set torque 34 to a limitation with respect to a first certain maximum torque in one motor direction and, optionally, a second certain maximum torque into the opposite motor direction, so as to obtain an effectively set torque 38. First and second maximum torques may by be equal to each other in magnitude, or may be different to each other. Further, they may depend on certain parameters relating to a current state of the motor 18 in terms of gear play as outlined in more detail blow. In other words, the limiter 36 performs a clipping. Torque 34 is clipped as far as exceeding the first maximum torque and clipped as far as falling below the second maximum torque. The effectively set torque 38 is fed into a torque-to-current converter 40 which converts the inbound torque 38 into the current 28. That is, converter 40 determines current 28 and outputs said current to motor 18. It is noted that the current 28 determined by converter 40 is a signal and might not be the actual current applied to motor 18. Rather, the latter current may stem from a current supply or an amplifier not shown in Fig. 1. Also, the motor current may be an abstract quantity to be decomposed into a multi-phase current, oftentimes, three-phase. Likewise, the torques 22, 30, 34 and 38 or signals, too, which are indicative of the corresponding torques. Examples for the conversion are described in more detail below. In principle, it is a mapping of the effectively set torque 38 onto current 28 according to some mapping function which, in turn, is adapted to the environment, i.e. the motorized system 12, such as to the motor 18 and maybe the gear 16 and leg 14 in terms of relevant design parameters such as stiffness, inertia, friction and motor efficiency.

Beyond the elements of motor controller 10 described above, motor controller 10 comprises a correction torque determiner 42. This determiner 42 determines and outputs the aforementioned torque correction 30 to corrector 32 and receives, as inputs, the externally set torque 22, the effectively set torque 38 as well as the motor encoder signal 24. Internally, determiner 42 comprises an effective correction signal determiner 44, a windup signal determiner 46 as well as a determination module 48. Determiner 44 determines an effective correction torque signal 50 based on the externally controlled torque 22 and the effectively set torque 38 such as by subtraction. For instance, determiner 44 might be implemented as a subtractor receiving torque 22 at its positive input and the effectively set torque 38 at its negative input. Determiner 46 determines the windup torque signal 52 based on a difference between the effective correction torque signal 50 and the correction torque 30. For instance, determiner 46 may be embodied as a subtractor receiving correction torque 30 as its positive input, and effective correction torque signal 50 at its negative input. The determination module 48 receives the motor encoder signal 24, the windup signal 50 as well as the effective correction torque signal 52 and determines, based thereupon, the correction torque 30.

Fig. 1 also shows an embodiment of an internal structure of determiner 48. This is the module responsible for determining the correction torque 30 so as to assist in reducing the energy to cope with in case of unexpected mechanical shocks such as due to unexpected or unavoidable collisions during the operation. In particular, while different embodiments exist to implement determiner 48, the embodiment illustrated in Fig. 1 splits-up the determination of the current torque 30 based on the three inputs, namely the motor encoder signal 24, the windup signal 52 and the effective correction signal 50 onto three branches or sub-modules 48a, 48b and 48c. The first one, 48a, receives the motor encoder signal 24 and determines, based thereupon, a first correction torque contribution signal 54a. The second, 48b, receives the effective correction signal 50 and determines, based thereupon, a second correction torque contribution signal 54b. And the third branch or sub-module 58c receives the wind-up signal 52 and determines, based thereupon, an instability-avoidance signal 54c. The three signals 54a, 54b and 54c are combined by a combiner 56 of module 58 to obtain the correction torque 30. As further outlined in more detail below, the individual sub-modules 48a to 48c may be embodied as FIR filters, and the combination by combiner 46 may be embodied by a summation but, even here, alternatives exist which are also discussed further below, such as forming each individual sub-module 48a to 48c, as a different linear function, or as a non-linear function or as a neural network, or such as forming each of sub-module 48b and 48c, as a machine learned functions such as a neural network while using an FIR for sub-module 48a, and further variants of Fig. 1 are also discussed below, such as embodying whole module 48 as a scalar function, which may be linear or non-linear, or a neural network.

After having described Fig. 1, it should be noted that alternatives exists in many aspects including, for instance, the formation of signals 50 and 52. For instance, in the above embodiment, it had been described that the effective correction torque signal 50 is determined based on a difference between the externally controlled torque 22 and the effectively set torque 38, and that the windup torque signal 52 based on a difference between the correction torque 30 and the effective correction torque signal 50. Thus, here the effective correction torque signal 50 corresponds to a linear combination of the externally controlled torque 22 and the effectively set torque 38, and the windup torque signal 52 to a linear combination of the correction torque 30, the externally controlled torque 22 and the effectively set torque 38. However, other linear combinations are feasible as well. For instance, the windup signal 50 might be formed based on a difference between torques 34 and 38, while determining the effective correction signal 50 based on a difference between such windup signal and the correction signal. Further variants such as forming weighted averages between the mentioned variants are imaginable.

The overall concept shall now briefly be described, whereafter the description proceeds with some details of underlying thoughts which resulted in the embodiments of the present application, as well as a description of further details with respect to individual (sub)-modules of Fig. 1 and possibilities to design determiner 48.

In particular, generally, the PVT controller 20 is for controlling a movement of the overall motorized system 12 by appropriately moving leg 14 via motor 18. To this end, controller 20 outputs an intended torque, namely the externally controlled torque 22. The motor controller 10 is for realizing this torque at motor 18 with, however, reducing the energy to be compensated and induced by a mechanical shock due to, for instance, a collision of leg 14 with the environment. Note that the torque limiter 36 serially connected between controller 20, and motor 18 does not limit the torque which motor 18 exerts onto, or experiences from outside. Rather, the torque limiter 36 merely limits the set torque resulting from the correction of the externally controlled torque 22 using the correction torque 30 and limits, thus, primarily an unfeasible or undesirable over-reaction against collisions. The correction torque determiner 42 is, thus, designed to appropriately determine the correction torque 30 so that, if there is currently no collision, motor 18 moves leg 14 as intended by externally controlled torque 22, whereas, if a collision takes place, the collision energy is, as fast as possible, compensated or consumed by appropriately controlling the motor 18 so that the controller 20 has no urgency to detect the collision and may, as soon as having detected the collision, react appropriately such as by entering a corresponding collision or contact mode, trying-out an alternative movement, walking backward, using a brake in order to stop the motor's 18 shaft or combinations thereof. In the embodiments outlined in more detail below, the correction torque determiner 42 is even able to cope with a controller 20 which, upon having detected the collision, halting the motor's shaft in that the control loop realized a motor controller 10 does not lead to over-excessive or exploding current behaviour of current 28 due to the abrupt halting. To this end, determiner 48 uses, besides motor encoder signal 24 itself, two further signals in order to appropriately determine the correction torque 30, namely the aforementioned windup signal 52 and the effective correction torque signal 50. The latter provides information or hints regarding whether any acceleration of the motor's shaft occur intentionally or not, and the former signal provides a possibility to avoid instabilities which could otherwise result without the usage of that signal.

That is, motor controller 10 and high-level or main controller 20 form a kind of motor controller system for controlling motor 18 with motor controller 10 controlling the motor 18 with compensation against shock-induced excess torque depending on the externally controlled torque 22 and controller 20 determining the externally controlled torque 22 based on an intended movement of the object moved by the motor 18, i.e. the motorized system 12. This motor controller system is, thus, a dual loop controller which controls, for instance, motor angle/position as well as output angle of the gear 16 or leg 14 by using an implicit or explicit gear / spring model and controller 20 may actually control one or more of position, velocity, and torque at the same time, so that the PVT acronym has been used in Fig. 1.

As described above, the motorized system 12 may form a robot comprising one more legs or arms each rotatable via a gear, with the robot comprising, for each such leg or arm, a motor for moving the respective leg or arm via the corresponding gear. A motor controller or motor controller system may then control the motor with compensation against shock induced excess force onto the gear as described above.

After having described the embodiment of Fig. 1 for a motor controller and a motorized system, the description is resumed with an explanation or description of thoughts which led to a certain implementation according to Fig. 1.

Actuators designed for robots, follow different concept or design strategies. Impedance control may, for instance, be made using a spring and by measuring torque by comparing encoder readings before and after the spring. It is, however, also possible to use a low inertia motor, not too much gear reduction and some compliance in the robot legs. Comparing these two concepts, while a spring constant of approximately X Nm/rad might, for instance, be used with a former impedance control, an equivalent spring constant of approximately 3X Nm/rad would be suitable for the latter approach. With this increased stiffness, however, even a drive with a reduced inertia cannot cope with sudden shocks without experiencing significant excess torque. Thus, while the usage of a low inertia motor might be preferable, it will reduce and not totally eliminate the excess torque exerted onto the motor in case of collisions. The embodiments of the present application address this issue by measuring the motor acceleration and mitigating that excess by some kind of "inertia compensation algorithm".

Technically speaking, what is asked for is a negative $D^2$ term. In position control, a P term would amount to a spring constant as a P-term generates a torque that is proportional to the displacement from a desired position, thus generating an "electronic spring". A D term would correspond to a damper as a D-term generates a force that is proportional to the difference of the position over two consecutive readings which is an approximation proportional to the angular velocity which corresponds to a velocity dependent torque which amounts to a damper. A $D^2$ term corresponds to inertia as a $D^2$ term generates a force proportional to the second derivative over time, which emulates an inertia. A D term is already problematic because it involves "differentiation" which, in practice, means taking the difference of two consecutive noisy encoder values, thus adding system delay and massively increasing noise. Take a $D^2$ term, and the square applies to the problems, too: double delay, square the noise. This is one of the main reasons that $D^2$ terms are seldom seen in industrial applications. Still, the prospect of peak torque mitigation with all its implications for gear and system design, makes it worth trying to address these issues, and the embodiments described in the present application enable to deal with these issues. In particular, in accordance with the present application, not only the motor encoder readings are used, but also the windup signal 52 and the effective correction torque/force signal 0. The reader is again reminded that the description preliminarily, and especially with respect to Fig. 1, focuses on rotational motors and torque instead of force, but that all these statements in the description may readily be transferred onto non-rotational motors by replacing torque with force, angle with position and so forth.

A naive implementation of the inertia compensation algorithm would just estimate the $D^2$ term such as by the use of a 3-tap FIR filter with the sequence of FIR coefficients 1, -2, 1, or would use to this end a Kalman filter, which would, however, add delay to the system. The filter would be multiplied with a factor with the aim of adding a motor current that is proportional to the filter output. Such a naive implementation has, however, drawbacks as follows:

1. The $D^2$ term does not take energy out of the system. Given the inevitable system delay resulting from the evaluation of three consecutive encoder readings, the system will inevitably become unstable if an external damper is missing.

2. As soon as the algorithm acts upon the motor, it will change the very acceleration it is evaluating. Thus, the algorithm becomes self-defeating.

3. The $D^2$ term is extremely noisy and requires high resolution encoders. "Filtering" will not work as it would increase system delay.

4. Of necessity, such an algorithm relies on accurate torque estimation.

Consequently, the following takeaways have been deduced from the above drawbacks, which finally led to the embodiments presented herein:

1. There should be some sort of dissipative term in the algorithm, but

a) the algorithm should be speed-invariant. In the example of Fig. 1, this means that the function underlying determiner 48 should be speed-invariant or, in case of the 3-branch implementation, the function (e.g., FIR filter) of branch 48a (as the speed invariance is then automatically also met with respect to the other two branches 48b and 48c). The two goals are even more easily achievable if a short-term-long-term approach is used: short-term dissipative, long-term speed-invariant.
b) the algorithm should also be position invariant. That is, the function underlying the determiner for 48 should be position invariant or, if the 3-branch implementation is used, the function underlying branch/module 48a (as the position invariance is then automatically also met with respect to the other two branches 48b and 48c).

2. The algorithm should also take into account its effect upon itself. There should be some sort of "compensation of the compensation".

a) As a corollary, the real limitations of the motor should be taken into account when designing the function underlying the determiner 48, such as current limit, situation and the like. In particular, they should be taken into account so as to avoid "slew-rate induced instabilities" which is a particularly nasty effect that results from wind-up induced system delays.

b) Consequently, the compensation realized by the motor controller 10 should contain some "anti-windup" terms, too, and this is why determiner 48 uses, besides the motor encoder signal 24, the windup signal 50.

3) The "set value" of the algorithm should not be a current, but a torque/force. The current is derived by a simple conversion from torque to current, in Fig. 1 in module 40. Physical effects such as temperature and situation effects may be taken into account in the conversion.

It is clear that in the determination of the function of determiner 48 such as the gains of the underlying FIR filters in case of using FIR filter implementation, should be chosen high enough in order to have an effect and sufficiently low to avoid overly noisy motor currents.

That is, summarizing the above, the only sensor signal that is used by the motor controller 10 is actually the motor encoder's signal 24, i.e. a signal measuring a current position of motor 18 such as its motor shaft in case of a rotational motor 18. To keep complexity manageable, it might be advantageous to implement determiner 48 in a manner so that the same is purely linear, i.e. so that the function of this determiner 48 is linear. Insofar, in terms of complexity, the implementation using FIR filters 48a to 48c might be advantageous, with combiner 48 combining the FIR filtered signals 54a to 54c in combiner 56.

Thus, in case of using the FIR filter implementation, the algorithm underlying motor controller 10 itself is a set of vector multiplications. The vector multiplications, which embody the FIR filtering, are denoted by the middle dot $\cdot$.

Again, the above thoughts led to the embodiments presented herein. Assume that some higher-level algorithm such as controller 20 in Fig. 1, sets a torque (which is a force in the general case of not being restricted to rotational motors), namely signal 22, and let us call that value DesiredTorque for the time being. We will modify that torque 22 by TorqueCorrection, i.e. 30. Of course, the motor torque is limited to $\pm$ MaxTorque, namely by limiter 36, with assuming here, for ease of understanding, equal maximum torque in both motor directions, and at the end, we get a TorqueCorrectedSetValue, i.e. 38. The EffectiveCorrection is the difference between DesiredTorque and TorqueCorrectedSetValue as this difference measures the deviation of the effectively set or applied torque from the actually desired torque. This EffectiveCorrection corresponds to signal 50 in Fig. 1. Any windup can be detected by evaluating the difference between EffectiveCorrection and TorqueCorrection, this difference corresponding to signal 52 in Fig. 1.

By this nomenclature, we have now everything in place. In case of using the FIR filter implementation in the separate branches according to Fig. 1, some samples of the above-mentioned variables need to be multiplied by some "fixed" FIR vectors. These could be CAN (Controller Area Network) objects or objects of another field bus system. Changing them on the fly could be risky, but feasible. There are three FIR vectors or, in different terms, three different FIR filters: the FIR filter 48a which is here denoted as MotionPositionFIR, the FIR filter 48b which is here denoted as CorrectionCompensationFIR, the FIR filter 48c which is here called WindupFIR.

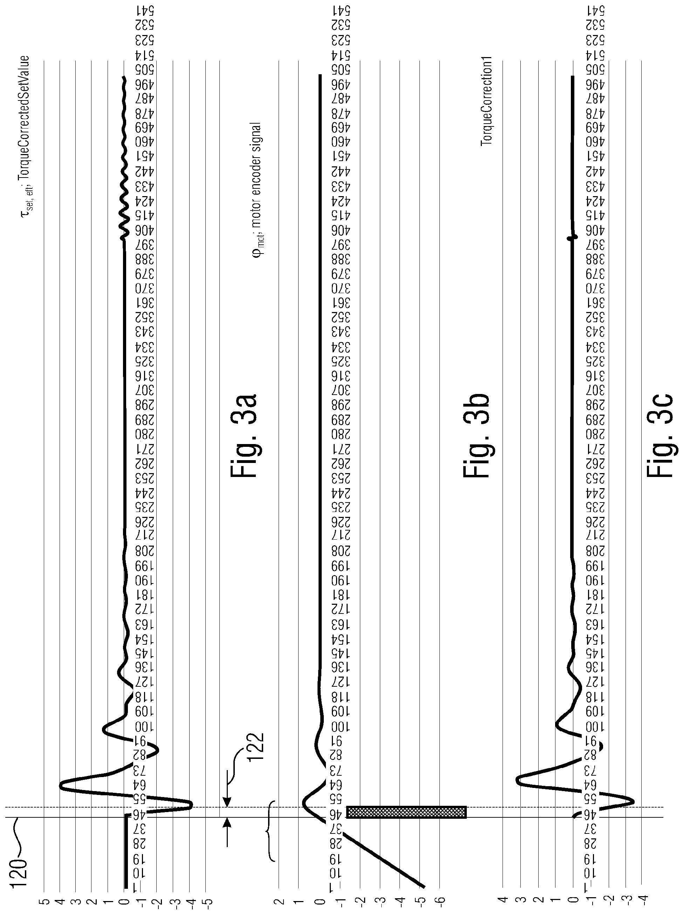

It turned out that the FIR filter length for the FIR filters 48b and 48c may be chosen shorter than the FIR filter length of FIR filter 48a. In a concrete example, the FIR filter length for filter 48a has been chosen to be 43 whereas a filter length of eight filter taps has been chosen for the other filters 48b and 48c. More statements and explanations regarding the coefficients will follow. More generally, the FIR filter length $n_a$ of FIR filter 48a (in terms of maximum tap span) might be more than 3 times the filter length of, or the average of the filter length of, FIR filters 48b und 48c, called $n_b$ and $n_c$, i.e. $n_a > 3/2 * (n_b + n_c)$ The latter FIR filters 48b and 48c might slightly differ in FIR filter length such that one is, at maximum, twice as long as the other, i.e. $|n_b - n_c| \leq \min(n_b, n_c)$. Moreover, the FIR filters' kernels might have "gaps" or, in different terms, taps acting like FIR coefficients of zero. Such multiplications with zero coefficients may, naturally, be skipped in the FIR filter implementation. As to the filter length of the FIR filters in modules 48b and 48c, it might be advantageous to set same so as to be between a tenth and half of the natural frequency period of the serial connection of motor 18, gear 16 and leg 14, as manifesting itself, for instance in the oscillation of the motor encoder signal in case of a collision as depicted in Fig. 3b after time 120 measured, for instance, as the temporal distance in motor encoder samples from time 120 of collision until the second return to the motor position at this time 120 in case of zero externally controlled torque and setting torque correction 30 to zero.

Now, more formally:

$$\text{TorqueCorrection1} = \text{MotorPositionFIR} \cdot (\text{last } n_a \text{ motor encoder readings})$$

$$\text{TorqueCorrection2} = \text{CorrectionCompensationFIR} \cdot (\text{last } n_b \text{ EffectiveCorrection values})$$

$$\text{TorqueCorrection3} = \text{WindupFIR} \cdot [(\text{last } n_c \text{ TorqueCorrection values}) - (\text{last } n_c \text{ EffectiveCorrection values})]$$

$$\text{TorqueCorrection} = \text{TorqueCorrection1} + \text{TorqueCorrection2} + \text{TorqueCorrection3}$$

$$\text{TorqueCorrectedSetValue} = \max(\min((\text{DesiredTorque} + \text{TorqueCorrection}), \text{MaxTorque}), -\text{MaxTorque})$$

$$\text{EffectiveCorrection} = \text{TorqueCorrectedSetValue} - \text{DesiredTorque}$$

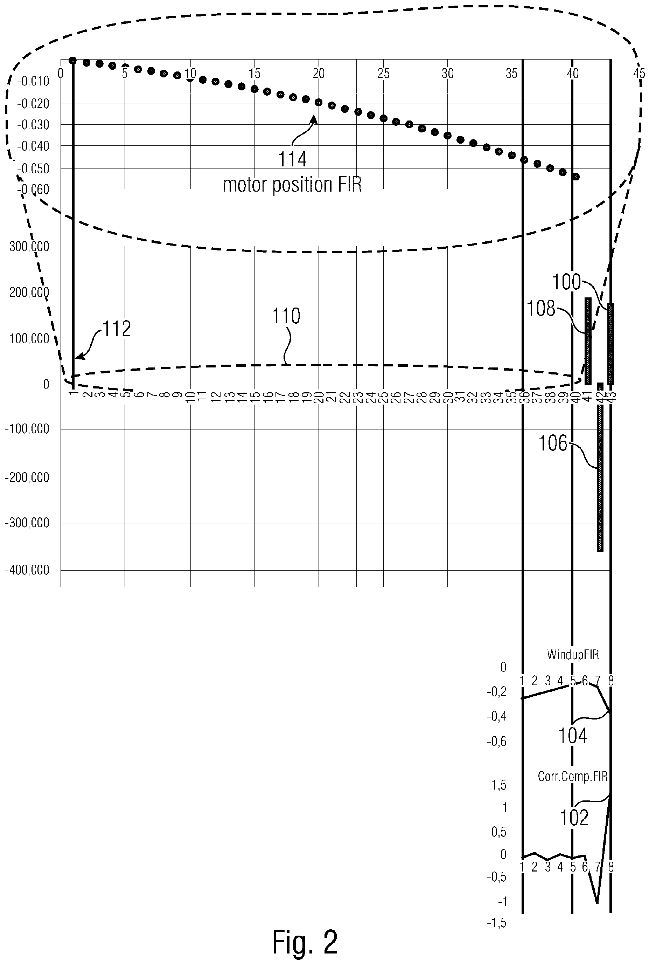

Figs. 2 and 3a to 3h illustrate a simulation test example based on a concrete implementation for the embodiment of Fig. 1 and, especially, the motor controller 10 with using FIR filters having the FIR filter coefficients shown in Fig. 2. In particular, from top to bottom, Fig. 2 shows examples for filter coefficients for filter 48a, filter coefficients for the FIR filter 48b and filter coefficients for the filter 48c. The just-mentioned concrete examples for filter lengths have been used. As discussed in more detail below, the first three leading-tap filter coefficients of filter 48a substantially correspond to a second derivative computation, while the FIR filter coefficients at the tail of the filter are comparatively small and form a kind of averaging means. The coefficients of filter 48a are not trained, whereas the FIR filter coefficients of the WindupFIR and the CorrectionCompensationFIR in branches/modules 48c and 48b are the result of training.

In particular, in Fig. 2, the FIR filter coefficients of the FIR filter in branch/module 48a are shown as points and columns in a graph, whereas a curve-representation is used for the other two FIR filters and branches 48b and 48c. The filter coefficients' filter-tap positions are indicated along the horizontal axis. Note that they are numbered, for each FIR, starting with 1 for the highest delay tap position to the zero delay tap position which, thus, is positioned at 43 for Filter 48a and 8 for filters 48b and 48c.

All FIR filters' filter coefficients are shown in a manner having the zero-delay tap filter coefficients registered at the right-hand side. That is, the zero-tap coefficient 100 of the motor position FIR of branch 48a is, within the filter kernel, multiplied with the most recent or current motor encoder signal sample 101 (see Fig. 1). Altogether the motor position FIR filter of Fig. 2 has here exemplary $n_a=43$ coefficients so that the zero-tap filter coefficient 100 is indicated to be positioned at the forty-third position or filter-tap position. Right below, the zero-tap FIR filter coefficient 104 of the wind-up FIR of branch 48c is indicated to be positioned at the eighth filter-tap position as this FIR filter has eight filter coefficients. Likewise, right below, the zero-tap filter coefficient 102 of the correction compensation FIR of branch 48b, is also indicated to be positioned at the eighth filter-tap position. Coefficient 102 is multiplied within the correction compensation FIR's filter kernel with the most recent sample 103 (see Fig. 1) of signal 50, which, in turn, has been obtained using - or depends on - the TorqueCorrection 30 resulting from the FIR filtering computations relating to the previous filter kernel position, for which, for instance, the FIR filter kernel of the motor position FIR had the zero-tap filter coefficient 100 registered to the motor encoder signal sample which is, at the moment of FIR filtering using FIR filter of module 48b so that coefficient 102 is multiplied with sample 103, positioned at the one-tap-delay position indicated at 107 in Fig. 1. Similar statement is true with respect to coefficient 104 of windup FIR 48c which is multiplied with the most recent sample 105 (see Fig. 1) of signal 52.

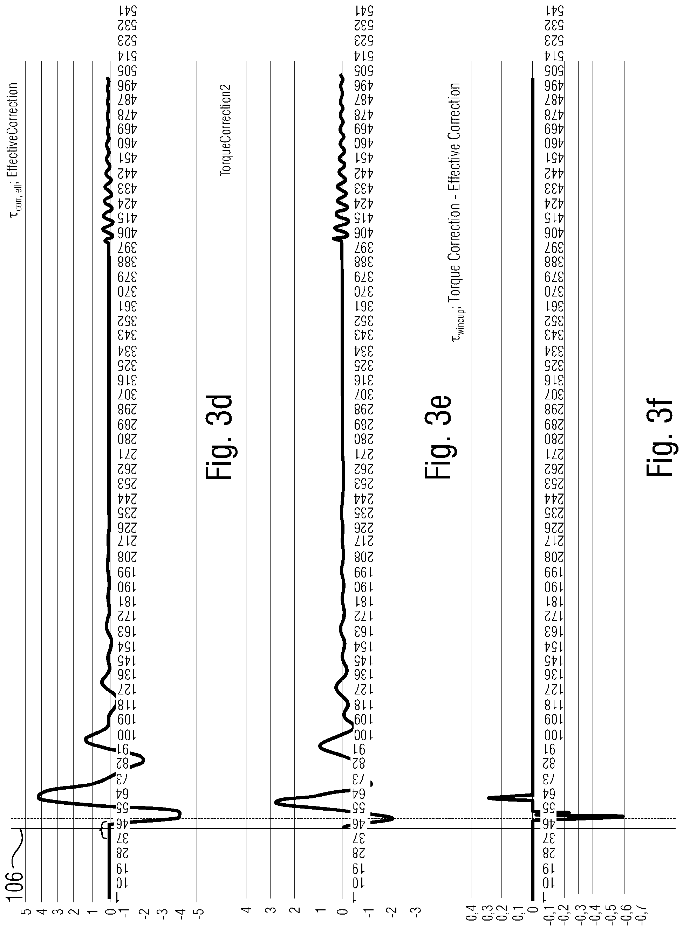

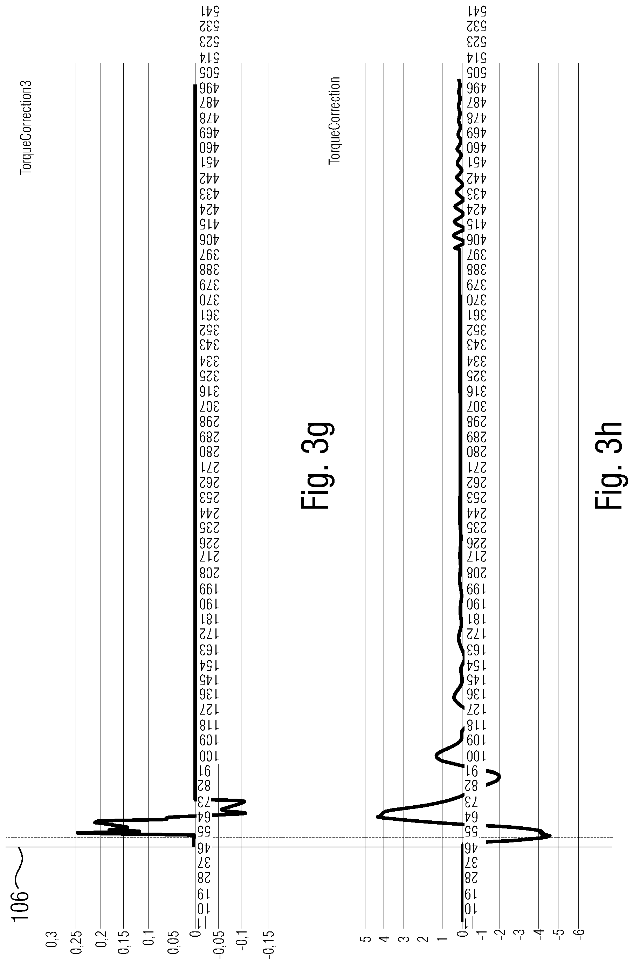

The FIR filters of Fig. 2 have been used and evaluated in the simulation of Fig. 3 to 3h in a situation where the externally-controlled torque 22 is zero, i.e. the outside controller or master controller wants leg 14 to swing freely. That is, signals 22, 34 and 38 are, at the beginning, up to a point where the leg 14 hits a certain object, i.e. up to the situation of a shock or collision, zero. Fig. 3a shows the graph of signal 38. For all graphs in Figs. 3a to 3h, the x-axis corresponds to the time axis in sample duration units. The y-axis in each graph shows the corresponding signal in arbitrary units. Figs. 3a to 3h show in the order mentioned: TorqueCorrectedSetValue 38, the motor encoder signal 24, TorqueCorrection1 54a, EffectiveCorrection 50, TorqueCorrection2 54b, TorqueCorrection - EffectiveCorrection, corresponding to signal 52, TorqueCorrection3 54c and TorqueCorrection 30. The time axes in these figures are horizontally registered to each other. At some point 120 in time, the leg 14 hits an object, i.e. the collision takes place. This is visible in the motor encoder signal graph of Fig. 3b.: up to time 120, the motor encoder signal changes, here increases. From that time onwards, physical structure characteristics such as the motor inertia, motor/gear/leg stiffness and the like, cause that the motor substantially keeps on moving at approximately the same rate for a certain time period which is roughly and exemplarily indicated as 122 in the figures. Relatively soon after the collision 120, the motor position FIR of module 48a starts yielding large (in absolute sense) values intended to instruct motor 18 to exert torque into a direction which reduces the collision energy for the whole system. The torque correction signal in Fig. 3h is, accordingly, caused to rapidly change which results in the effective correction signal in Fig. 3d to assume non-zero values as the latter signal corresponds, in this example, to the torque correction of Fig. 3h due to the externally-provided torque 22 being zero. Due to this, the correction compensation FIR filter starts contributing to the torque correction signal of Fig. 3h in the same sense or in the same direction as torque correction 1 of Fig. 3c provided by the motor position FIR as it is depicted in Fig. 3e. And finally, the windup FIR of module 48c obtains via signal 52, TorqueCorrection - EffectiveCorrection, shown in Fig. 3f, an information on the effective influence or impact of torque limiter 36 and produces, as a further combination signal to the final torque correction, the signal shown in Fig. 3g supposed to avoid instabilities.

Figs. 3a to 3h have additionally been simulated for the case that after some period of time, here exemplary approx.. 360 sample periods, the master controller decides to use a brake, or Coulomb friction kicks in, effectively halting the motor 18 and, nevertheless, motor controller 10 does not overreact and keeps within a stable situation. Merely low fluctuations in the torque corrected set value occur.

In designing the motor position FIR forming branch or module 48a, the following considerations might be useful. As explained above, the motor position FIR should meet three conditions: position invariance, i.e. no hidden P-term, speed invariance, i.e. no hidden D-term, and moderate noise.

As to position invariance, the mode of operation of motor controller 10 should be position invariant, i.e. it should display identical behavior no matter what the starting position of the motor 18 is. Otherwise, there would be a hidden P-term, and P-terms belong to any higher-level control loop, not torque control which motor controller 10 is responsible for. In terms of the motor position FIR's weights or coefficients, this means that the sum of all FIR coefficients of the motor position FIR should be zero, because then, any constant position offset would add zero torque.

This zero-sum condition can be achieved by making one of the FIR coefficients of the motor position FIR the negative sum of all other FIR coefficients $x_i$ of the motor position FIR. In an embodiment, the zero-delay tap FIR coefficient 100 can be used to this end.

$$x_{n_a} = -\sum_{i=1}^{n_a-1} x_i$$

As to speed invariance, the mode of operation of motor controller 10 should also be speed-invariant, because otherwise it would introduce a hidden D-term, which belongs to position control algorithms, not torque control. The long-term torque should be equal to the desired set torque.

The speed invariance can be codified by using the following thought experiment: a motor at constant speed would have a constant difference between successive encoder readings, i.e. successive samples of the motor encoder signal 24. Without loss of generality, we can assume that this difference is one (or any other constant term). So, in that thought experiment, we would multiply all taps or coefficients of the FIR filter with a vector [1, 2, 3, ..., n], with n being the FIR filter length, and sum them, and the resulting scalar product should be zero.

A direct way of ensuring this condition comes with the beauty of technical mechanics: the above condition implies that the first moment of the filter taps or filter coefficients should be zero, and this amounts to a zero-torque condition. Such a zero-torque condition can be ensured without too much calculation. For example, we can use any reference point. From the position invariant condition, we derived one predetermined tap's coefficient, such as 100, as the negative sum of the previous taps. To avoid circular references, we can render that tap's coefficient the reference point. We now choose another tap's coefficient, such as the coefficient belonging to a neighboring tap, to ensure the zero-torque condition, which for a $n_a$-tap FIR filter looks like this:

$$zero\ torque \Leftrightarrow \sum_{i=1}^{n_a-1} (n_a - i)x_i = 0 \Leftrightarrow x_{n_a-1} = -\sum_{i=1}^{n_a-2} (n_a - i)x_i$$

Again, in Fi. 2, $n_a$ is 43.

Further, the motor position FIR filter realizes a double differentiation, as seen by the alternating signs of the three leading-end FIR filter coefficients, i.e. the zero-delay FIR filter coefficient 100 used to realize the position invariance, the one-tap-delay FIR filter coefficient 106 which may be, as outlined above, used to realize the speed invariance, and the two-tap-delay FIR filter coefficient 108 in Fig. 2. Among these coefficients, coefficients 100 and 108 are of same sign, while coefficient 106 between same is of opposite sign. For maximum impact mitigation, these terms or coefficients will become huge, which comes with two practical disadvantages: the motor controller 10 or, to be more precise, determiner 48 or, to be even more precise, module 48a and its FIR filter implementation, respectively, namely the motor position FIR, would multiply encoder noise by exactly those huge weights/coefficients, and would lose robustness by being overly dependent on "constants" like motor inertia or torque constant being constant.

This can be remedied by limiting the FIR filter coefficients. One practical way is to set coefficient 108 to a predetermined value such as to a value of 100. For example, the coefficient may be set to a value between

$$2^M/400 \leq x_{n_a-2} \leq 2^M/20$$

wherein M is the number of bits at which the integer multiplications for FIR filter at module 48a are performed.

Thus, at least coefficients 100, 106 and 108 of the FIR filter in module 48a might be designed as described above, thereby reducing optimization efforts to optimize further coefficients or parameters of modules 48a-48c. Note, however, that while coefficient 100 might equal the negative sum over all coefficients of the motor position FIR except coefficient 100 so that the sum over all coefficient of the first filter is zero, this might naturally by relaxed to an extent where the absolute of the sum over all coefficients of this motion position FIR keeps smaller than 1% of an absolute of the, in magnitude, greatest coefficient among the coefficients of the first filter. Likewise, the determination of coefficient 106 may be relaxed to an extent where the first moment of the coefficients about coefficient 100 is smaller than 10% - or, alternatively, 5% or even 1% - of an absolute of the, in magnitude, greatest coefficient among the coefficients of the first filter. Even in the relaxed state, the first correction torque contribution signal 54a might get sufficiently position and speed independent.

Further, as became clear from the above, an absolute of a sum over the two-tap-delay FIR filter tap's coefficient 108, the zero-delay FIR filter tap's coefficient 100 and the one-tap-delay FIR filter tap's coefficient 106 is not zero, because the remainder yields the sum over the remaining coefficients 110 which form the "tail" of the motor position FIR. The sum over these coefficients 110 may be chosen so that same is smaller than 10% of an absolute of the one-tap-delay FIR filter tap's coefficient.

$$\sum_{i=1}^{n_a-3} x_i < \frac{1}{10} x_{n_a-1}$$

Coefficients 110 form a sort of "tail" of the FIR filter impulse response function of the motor position FIR and may correspond to a constant function or a function decaying towards the trailing end 112 of the FIR filter kernel, such as forming a linear function, a quadratic function or an exponential function or any other monotonic or strictly monotonic function as depicted in Fig. 2 at 114.

That is, briefly summarizing and repeating the above, module 48a primarily forms a second derivative of its input, namely signal 24, with additionally showing some negative low-pass filtering contribution. The windup FIR may show, as depicted in Fig. 2, some low-pass filtering characteristic in that all its non-zero coefficients are of the same sign such as negative.

To see if the dimensioning went right, a simulation can be made by use of a certain ENOB (effective number of bits of encoder resolution) such as 13 bits.

As a matter of fact, inertia compensation algorithms are laden with instability traps, and the motor controller 10 is no exception. To assess its stability, simulations may, however, be done and verified in a minimum viable product (MVP) based on a certain motor design of motor 18. The following robustness criteria, or one or more thereof, might be tested against:

First, robustness against changes in rotor mass inertia and torque constant should be checked. Should, for some reason, the motor mass inertia change, or should, for some other reason, the motor torque constant change, the effect would be similar: the relationship between current command and rotor acceleration would be affected.

There are two ranges for change:

1. "Normal" changes during production, and normal errors in operation, like temperature transients that are not accurately reflected by the motor model. These changes amount to about ±10% and may be simulated with a what-if analysis, where the rotor mass inertia is varied accordingly, and where the total vibration energy after a certain settling time is measured, indicating stability.

2. "Radical" changes because of a product redesign. Here, a re-normalization of the FIR parameters is needed. This can be simulated by a parameter which linearly scales the whole motor position FIR curve. Without re-optimizing the correction compensation FIR, one can simulate that the rotor inertia of can be changed within the range of 15% to 200% without generating instabilities, even with ±10% post-production variation. Hence, it is highly recommended to re-normalize the FIR coefficients at production after making some dynamic tests that reveal that torque constant as well as rotor moment of inertia.

Thus, the coefficients of FIR filters or parameters, such as neural network weights, in scalar functions in modules 48a and 48b, or, in case of using a rather general scalar function implementation in determiner 48, the parameters of the scalar function of determiner 48, such as neural network weights, might be optimized using a cost function which depends on measure of sensitivity against variations of mechanical design parameters, or might be optimized otherwise with checking any optimization intermediate result, however, with respect to meeting some minimum level of insensitivity against variations of mechanical design parameters.

Second, as to robustness against Coulomb friction, the following is noted. Much unlike damping, Coulomb friction poses a real problem for torque control because it amounts to an infinitely stiff motor because there is no movement within a certain current range. This could lead to unpleasant audible oscillations up until that current range. For that reason, a "zero acceleration phase" may be simulated such as seen in Figs. 3a to 3h after temporal digit 400. During that phase, the current is not to explode. These unwanted oscillations may be included as part of the optimization criteria, i.e. this criterion may be used as one criterion for optimizing the coefficients within determiner 48.

Thus, the coefficients of FIR filters or parameters, such as neural network weights, in scalar functions in modules 48a and 48b, or, in case of using a rather general scalar function implementation in determiner 48, the parameters of the scalar function of determiner 48, such as neural network weights, might be optimized using a cost function which depends on measure of robustness against Coulomb friction such as measuring the swing height after a motor halting at a predetermined reminder motor speed as described above, or might be optimized otherwise with checking any optimization intermediate result, however, with respect to meeting not showing instabilities at such a Coulomb friction situation. Note that, alternatively, motor controller 10 might have some bypass or gating functionality so as to disable the effective correction torque 30 in situations where the motor 18 becomes slower than a predetermined limit close to the motor encoder's noise in which case the optimization might be relaxed in this regard.

Third, some robustness against high-impact energies should also be present. The system might spin into a slew-rate induced instability. Therefore, the FIR coefficients, especially the anti-windup part, should be tuned accordingly. The motor controller 10 may be simulated against collisions up to some expected or admitted maximum speed such as, for instance, 18 rad/s radians per second.

Thus, the coefficients of FIR filters or parameters, such as neural network weights, in scalar functions in modules 48a and 48b, or, in case of using a rather general scalar function implementation in determiner 48, the parameters of the scalar function of determiner 48, such as neural network weights, might be optimized with checking any optimization intermediate result, however, with respect to meeting this criterion.

Fourth, robustness against encoder non-linearities should also be taken into account. Encoder noise has already been mentioned above. Encoder non-linearities are a different issue because they are reproducible and therefore introduce spurious acceleration signals. For example, an integral non-linearity (INL) with high harmonic content was found to be inacceptable even if its absolute value was comparatively low..

Thus, the coefficients of FIR filters or parameters, such as neural network weights, in scalar functions in modules 48a and 48b, or, in case of using a rather general scalar function implementation in determiner 48, the parameters of the scalar function of determiner 48, such as neural network weights, might be optimized with checking any optimization intermediate result, however, with respect to meeting this criterion.

The coefficients of FIR filters or parameters, such as neural network weights, in scalar functions in modules 48a and 48b, or, in case of using a rather general scalar function implementation in determiner 48, the parameters of the scalar function of determiner 48, such as neural network weights, might additionally or alternatively be optimized using a cost function which depends on at least one or more of a measure for uncompensated collision energy, a measure for temporal duration until the correction torque vanishes, and a measure for current noise increase imposed by the correction torque. In other words, coefficients of the filters 48a and 48b might be machine learned using a cost function which depends on at least one or more of a measure for uncompensated collision energy, a measure for temporal duration until the correction force vanishes, a measure for current noise increase imposed by the correction force, a measure of sensitivity against variations of mechanical design parameters, a measure of robustness against Coulomb friction, and a measure of robustness against motor encoder non-linearities. The optimization may attempt to minimize the cost function which might increase with the one or more measures mentioned.

If using a robot as motorized system 12, elastic elements might be used to facilitate the motor controller's mode of operation and the optimization may take the elasticities into account. That is, the mentioned FIR coefficients or parameters might be optimized to cope with all elasticities such as coping with zero elasticity to avoid instabilities due to Coulomb friction.

The description brought forward above concentrated on the internal elements of motor controller 10, but for the time being, converter 40 and possibilities for a cooperation with main controller 20 have not been described so far in more detail. The following description now concentrates on the latter issues.

Due to the fact that the following description, inter alia, focuses on details concerning elements external to motor controller 10, such as details concerning motor, gear and controller 20, some initial statements shall be made.

As already described above, while the motor controller 10 of the present application may be used in relation with any type of motor such as linear actuators of rotational motors, the following description concentrates on an example where motor 18 a rotational electric motor with a sub-millisecond mechanical time-constant, typical of so-called torque-motors. Such a motor 18 includes rotor, but does not include the bearings which are considered part of the gear 16, instead. The gear 16 may, for instance, be a two-stage planetary gear. The term actuator may denote the combination of motor 18 and gear 16 and encompass, accordingly, the corresponding electronics, sensors, connectors and the housing. The terms "actuator" and "[robotic] joint" may be used interchangeably.

A further aspect concerns signs. Positive q-currents denote currents that, if large enough, will result in a positive acceleration of the motor's 18 position and likewise a positive motor torque denotes a torque, if large enough, will result into motor 18 exerting a positive acceleration with respect to the motor encoder signal. A positive acceleration may be defined as the second derivative of the motor encoder signal 24. The motor encoder readings or, using a different term, the motor encoder signal's 24 sample values may be measured in certain units such as in increments with n increments resulting into one complete motor turn in case of a rotational motor 18 as currently assumed to apply. For instance, 10,240 increments per motor turn, i.e., 2560 cpt = 10x256 may apply. This corresponds roughly to 13 bits. Gear encoder readings or, in different terms, the samples of the gear position signal 26 may be measured in less accurate increments than compared to a motor position signal 24 such as at 4096 increments per output turn of gear 16 corresponding to, for instance 12 bits. In the description brought forward below, some portions relate to the actuator or motor being in a certain state, namely in one or four quadrants. These descriptive portions relate to a coordinate system where the horizontal or x axis corresponds to the motor's 18 speed whereas the vertical or y axis corresponds to the motor's torque so that the first quadrant Q1 corresponds to a situation where the motor's 18 speed is positive just as the torque is, while the second quadrant Q2 corresponds to a case where the motor's 18 speed is negative, whereas the torque is positive, and the third quadrant Q3 corresponds to a situation where the speed is negative, just as the torque is, and the fourth quadrant Q4 corresponds to a situation where the speed is positive, whereas the torque is negative.

It is also worth noting that while motor controller 10 is concerned with motor torque control which refers to finding the right current setting to achieve a certain motor torque, including, for instance, viscous friction c5, but excluding static friction $M_{VA}$. The actuator torque control is about finding the right motor torque setting to get a desired joined output torque. As will become clear from the following description, the two control loops have to be distinguished and while motor control is concerning with a formal motor torque control, the latter actuator torque control is rather part of the tasks associated with the PVT controller 20.

As already described above, it is the task of converter 40 to map the inbound torque command, namely the effectively set torque 38 onto a current 28 to be applied to motor 18. The mapping could be denoted by function I/M). Finding a formula for I(M) with M denoting the motor torque is much easier than M(I) because the former explodes while the latter situates. Exploding formula are easier to describe by the use of, for instance, polynomials. As a matter of fact, they are much more accurate than the currently used busy functions which could alternatively be used.

To calculate the motor current $I_{mot}$ as a function of the motor torque command $T_{mot}$, one should take the following into account, in this sequence: Additional torque due to motor Coulomb friction $MVA_{mot}$ and viscous friction $C_{5mot}$ than temperature drift of magnets described by $T_{Cmagn}$ which is a negative number, and then the situation curve.

Please note that for the definitions here, the usual definitions of the Park and Clarke transforms and the implicit conversion factors used in the motor controller to give the equivalent block commutation currents. Then further, in SI units, a motor without friction, at 25 °C would need the following current to achieve the torque $T_{25}$:

$$I_{mot} = k_V T_{25} + k_2 T_{25}^2 + k_3 T_{25}^3 + k_4 T_{25}^4 + k_5 T_{25}^5$$

Where kv is the speed constant, i.e., the inverse of the torque constant, and $k_2..k_5$ are its higher order terms. $T_{25}$ needs to be adjusted for temperature and friction, again in SI units:

$$T_{25} = \frac{T_{mot} + MVA_{mot} * sgn(\omega_{mot}) + c_{5mot} * \omega_{mot}}{1 + Tc_{magn} * (\vartheta - 25°C)}$$

Here, $T_{mot}$ is the torque command, i.e., the torque to be mapped onto current $I_{mot}$. $MVA_{mot}$ is the static friction of the motor. sgn (signum) is a function outputting the sign of its attribute. $\omega_{mot}$ is the speed of the motor encoder signal, i.e., the first derivative. $c_{5mot}$ is, as already outlined above, the viscous friction of the motor 18. $T_{Cmagn}$ is as already denoted above, the temperature drift of the magnets within motor 18. $\vartheta$ is the motor's 18 temperature.

The simple $c_5$ term in the above formula has certain shortcomings which are addressed as follows by using, instead, a refined model for viscous friction $c_5$:

1. The viscous friction is torque dependent. So, one way to address this is to make $c_5$ a constant plus a linear torque dependent term.

2. The viscous friction has an eddy current term that makes the motor less effective in reverse mode.

Hence, the above formula is modified and c5 split into 4 coefficients as follows:

$$T_{25}$$
$$= \frac{T_{mot} + MVA_{mot} * sgn(\omega_{mot}) + c_{5mot}(1 + c_{51} * T_{mot}) * \omega_{mot} + (c_{53} * sgn(T_{mot}) + c_{54} * |T_{mot}|) * |\omega_{mot}|}{1 + Tc_{magn} * (\vartheta - 25°C)}$$

Here, in addition to the parameters discussed above, $c_{53}$ $c_{54}$ and $c_{51}$ are certain viscosity parameters.

In the above formula, the motor speed $\omega_{mot}$ needs not to be too accurate since it is multiplied with a rather small $c_5$. Depending on the control mode, it can be taken from the last speed reading, i.e., the most recent or current sample of the motor encoder signal 24 or, to be more precise, a difference of the last two encoder readings or motor encoder signal samples divided by cycle time. It should be noted that converter 40 might also be used within another control loop which, for instance, bypasses the motor controller 10 which is, as explained herein, responsible for establishing a motor torque control. In case of such alternative modes or control loop, it may be that a certain command is provided. Such mode could be a joint-position-velocity-torque control mode.

That is, back to Fig. 1, converter 40 may, in mapping the inbound effectively set torque signal 38 onto the motor current $I_{mot}$ equate $T_{mot}$ in the last formula with the inbound command, i.e., signal 38, and setting the other parameters in this formula according to predefined values specifically set for the structure of the surrounding elements of the motor control 10 and with setting, for instance, $\omega_{mot}$ in the manner just-described, namely by deriving an estimate of the current velocity based on the motor encoder signal 24. The result is a variable $T_{25}$ determined depending on, inter alia, motor temperature and the effectively set torque, and a polynomial function in this variable, such as the above one of order five, is used to compute the motor current.

It should be noted that any higher-level control part of motorized system 12 such as the PVT controller 20 might have an interest, or may use, an information on some effective motor torque exerted by motor 18 onto leg 14 via gear 16. In order to do so, not only the actual motor torque needs to be evaluated, but also its angular acceleration $\alpha_{mot}$ which would eat up part of the torque because of the finite motor inertia $\Theta_{mot}$. The basic formula is

$$T_{eff} = T_{mot} - \alpha_{mot} \, \Theta_{mot}$$

Here, $T_{mot}$ is, again, the effectively set torque 38. $\alpha_{mot}$ is determined in the manner outlined in more detail below. Converter 40 might be responsible for informing controller 20 or any other module of motorized system 12 on the effective motor torque $T_{feff}$.

On the one hand, $\alpha_{mot}$ and $T_{mot}$ are quite noisy. On the other hand, the motor controller's 10 position control frequency is much higher than the high level controller's 20 frequencies such as more than 5 times higher. For instance position control frequency might be 2.5 kHz with a time interval $\Delta_t$ of 500 microseconds whereas the processing frequency of controller 20 might be 400 Hz at most, so that the frequencies might be separated by a factor of larger than 5 or, even larger than 6. This enables to smooth out the torque and acceleration readings: We can take the average of the last six set torques $T_{mot}$, which, as just-explained, equal $\tau_{zeff}$ 38 and the average of the last six accelerations, and for the latter there is a neat trick we can use. Let $\varphi_i$ be a sequence of the last motor encoder readings 24, in SI units, where $\varphi_1$ is the most recent reading. Then, an estimate for the most recent acceleration would be

$$\widetilde{\alpha_{mot}} = \frac{\varphi_1 - 2\varphi_2 + \varphi_3}{(\Delta t)^2}$$

The average of the last n acceleration estimates is therefore

$$\overline{\widetilde{\alpha_{mot}}} = \frac{(\varphi_1 - 2\varphi_2 + \varphi_3) + (\varphi_2 - 2\varphi_3 + \varphi_4) + \cdots + (\varphi_n - 2\varphi_{n+1} + \varphi_{n+2})}{n(\Delta t)^2} = \frac{\varphi_1 - \varphi_2 - \varphi_{n+1} + \varphi_{n+2}}{n(\Delta t)^2}$$

So, this averaged acceleration $\overline{\widetilde{\alpha_{mot}}}$ might be used as the acceleration in the above formula to compute $T_{eff}$ and amounts to the difference of two speed readings that are n samples apart, divided by their time difference n*$\Delta$t. So, one implementation of the above formula could look like this:

$$\bar{\bar{\alpha}} = \frac{actual\ speed\ estimate - last\ speed\ estimate\ sent\ to\ master}{time\ elapsed\ between\ the\ two\ readings}$$

Another method would be to use an IIR exponential filter or to use an averaging filter with "reset" that is triggered by a corresponding signal. These averaging filters could be applied to both the acceleration and the set torque.

As already outlined above, controller 20 is rather interested in controlling leg 14 or, differently speaking, gear 16 rather than motor 18. This joint torque control can, substantially, be decomposed into two steps, namely determining the right quadrant, and then the use of the right formula.

To be more precise, in determining the externally controlled torque 22, controller 20 determines this torque 22 actually on the basis of a wished joint torque $T_{joint}$ to be attained. In doing so, controller 20 takes into account the current "status" of motor 18, i.e., at which quadrant the motor or actuator currently is. This is explained in more detail below.

The joint torque control includes the gear 16 and is, therefore, strongly dependent on the quadrant the joint 16 is operating in. The decision which quadrant is currently present for joint torque control is done as follows: The sign of the speed is determined by comparing the last two motor position readings, i.e., the last two samples of the motor encoder signal 24, while the sign of the joint torque is just determined by looking at the sign of the desired joint torque, i.e., some parameter or value occurring in the inner of the joint torque control of controller 20. Note that in the transition between torque signs, there might be a jump in the relation between gear and motor position due to gear play.

As a justification, the following is noted. The motor encoder in motor 18 is more accurate than the encoder at the gear 16. Therefore, motor speed is better to assess the gear. The gear 16 is quite stiff, so a motor speed change will propagate quite fast through the gear 16. As for the torque sign, this is used to assess the desired motor torque and current, and it is logical to "assume the sale" that the desired torque will indeed be achieved, with the intended sign. The timing of the sign reversal will align well with torque control because of the very high torque bandwidth.

The most important ingredient is the gear efficiency. The gear 16 is said to be operated in reverse if it is in Q2 or Q4. The intrinsic "maximum" gear efficiency is different for forward and reverse operation, with an estimation for the reverse efficiency being:

$$\eta_{reverse} \cong 2\,\eta_{forward} - 1$$

The $\eta_{reverse}$ is the efficiency of the gear in reverse mode, i.e., in Q2 or Q4, whilst $\eta_{forward}$ is the gear efficiency on forward mode, i.e., Q1 or Q3.

It is still recommended to assign a separate, measurement-based value for the reverse efficiency instead of just calculating it.

The tricky part is that if we introduce friction, the gear may change quadrants depending at which way you look at this. For the rather efficient gear, we are using, the resulting error will be negligible, so the following simplified formulae (where c5 has been condensed with motor c5) can be used for a gear 16 with reduction ratio i:

$$T_{mot} = \frac{T_{joint} + MVA_{gear} * sgn(\omega_{mot})}{i} * \begin{cases} \frac{1}{\eta_{forward}}, if\ sgn(T_{joint}) \otimes sgn(\omega_{mot}) = 1 \\ \eta_{reverse}, else, i.e., if\ sgn(T_{joint}) \otimes sgn(\omega_{mot}) = -1 \end{cases}$$

Here, MVA$_{gear}$ is the gear's static friction, as seen from the gear output

Estimating the effective joint torque is tricky because the relationship between motor torque and joint torque is discontinuous. To make things worse, there is Coulomb friction at each stage, making the determination of the right quadrant quite difficult. So, we must live with a certain "no-man's-land" between the quadrants the size of which is directly dependent on all friction terms.

Thus, the ugly compromise is to rely on the set value of the joint torque for the determination of its sign.

An estimate for the joint torque is

$$\tilde{T}_{joint} = -MVA_{gear} sgn(\omega_{mot}) + i\,\tilde{T}_{eff} * \begin{cases} \eta_{forward}, if\ sgn(T_{joint}) \otimes sgn(\omega_{mot}) = 1 \\ \frac{1}{\eta_{reverse}}, else, i.e., if\ sgn(T_{joint}) \otimes sgn(\omega_{mot}) = -1 \end{cases}$$

$\tilde{T}_{eff}$ is an estimate of the effective motor torque and the estimation may be attained by some averaging for acceleration and said torque as described above.

Thus, summarizing the above, position control and torque control are envisaged. The position control is just pure, no speed settings, at 50 Hz, so eight samples come with the same position each. Therefore, rather low positon gains are advantageous to avoid sore tooth noise.

Summarizing the above embodiments, the embodiments are able to detect collisions by way of surveillance of motor/rotor movement. In effect, the correction torque signal 30 leads to an additional current, leading into the same direction as the impact of the collision. This is done by means of determiner 48 which may be implemented by FIR filters. One of these FIR filters may evaluate the development of the motor position.

An additional damping is established by prolonging this FIR filter and an appropriate choice of appropriate, efficiency which stabilize the instability which is inherent for a simple mass compensation.

Further, a further FIR filter might be used in determiner 48 which takes into account the impact of the torque compensation onto the motor position and yields a corresponding correction contribution 48b.

Another FIR filter is introduced in order to avoid instabilities induced by the torque limiter.

The coefficients may be determined such that one or more of the following aims are achieved:
Stability for all possible stiffnesses which are below a chosen leg stiffness. Thus, if the robot leg hits a soft object or if the leg swings freely, this situation should by no means lead to instabilities.

Further, there should be stability against Coulomb friction: Even if the motor moves below static friction, the torque control should not get instable.

Further, the amplification of noise should be endurable: An evaluation of the second derivative of the motor position signal inherently comes along with large noise. Determiner 48 or the filters therein should be dimensioned in such a manner that, using the given accuracy of the motor encoder, the additional noise imposed by the current correction is so small that the additional heat resulting therefrom is relatively low. A useable target value is, for instance, an RMS-value of the noise which is a tenth of the nominal moment; but this means the additional heat is below 1% of the nominal power loss.

As described above, converter 40 should provide a good torque feet forward. This includes an efficient determination of the quadrant and; accordingly, the taking into account of friction forces and gear efficiencies. This might assist in avoiding instabilities.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

In particular, above description revealed, and may be used to further defines:

a method for controlling a motor with compensation against shock-induced excess force, comprising

correcting an externally controlled force 22 by use of a correction force (30) so as to obtain a set force 34,

subjecting the set force 34 to a limitation so as to obtain an effectively set force (38);

determining a current 28 to be applied onto the motor 18 based on the effectively set force 38; and

determining the correction force 30 based on

a motor encoder signal of a motor encoder of the motor 18,

an effective correction force signal 50 corresponding to a linear combination of two or more of

- the externally controlled force 22,
- the correction force 30,
- the set force 34 and
- the effectively set force 38,

which is indicative of an force correction caused by the motor controller, and

a windup force signal 52 corresponding to a linear combination of

- the effectively set force 38 with one or more of

- the externally controlled force 22,
- the correction force 30 and
- the set force 34, and

a computer program having a program code for performing, when running on a computer, such a method as just defined.

Depending on certain implementation requirements, embodiments of the invention may be implemented in hardware or in software. The implementation may be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a data carrier having electronically readable control signals, which are capable of cooperating with a programmable computer system, such that one of the methods described herein is performed.

Generally, embodiments of the present invention may be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The apparatus described herein, or any components of the apparatus described herein, may be implemented at least partially in hardware and/or in software.

The methods described herein may be performed using a hardware apparatus, or using a computer, or using a combination of a hardware apparatus and a computer.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

References

[1] Fabian Just, Kilian Baur, Verena Klamroth-Marganska, Robert Reiner and Geog Router: Motor Inertia Compensation of the ARMin Rehabilitation Robot, ETCH, Zurich, 2016.

**Claims**

1. Motor controller (10) for controlling a motor with compensation against shock-induced excess force, comprising

    a corrector (32) configured to correct an externally controlled force (22) by use of a correction force (30) so as to obtain a set force (34),
a force limiter (36) configured to subject the set force (34) to a limitation so as to obtain an effectively set force (38);
a force-to-current converter (40) configured to determine a current (28) to be applied onto the motor (18) based on the effectively set force (38); and
a correction force determiner (42) configured to determine the correction force (30) based on

a motor encoder signal of a motor encoder of the motor (18),
an effective correction force signal (50) corresponding to a linear combination of two or more of

- the externally controlled force (22),
- the correction force (30),
- the set force (34) and
- the effectively set force (38),

which is indicative of an force correction caused by the motor controller, and
a windup force signal (52) corresponding to a linear combination of

- the effectively set force (38) with one or more of

- the externally controlled force (22),
- the correction force (30) and
- the set force (34).

2. Motor controller of claim 1, configured to form

the effective correction force signal (50) based on a difference between the externally controlled force (22) and the effectively set force (38), and
the windup force signal (52) based on a difference between the correction force (30) and the effective correction force signal (50).

3. Motor controller of claim 1 or 2, wherein the correction force determiner (42) is configured to determine the correction force (30) by subjecting a template of most recent sample values of the motor encoder signal (24), the windup force signal (52) and the effective correction force signal (50) to a scalar function.

4. Motor controller of any of claims 1 to 3, wherein the correction force determiner is configured to determine the correction force ($\tau_{corr}$) by

separately determining

from the motor encoder signal (24) a first correction force contribution signal (54a) which is indicative of an acceleration,
from the effective correction force signal (50) a second correction force contribution signal (54b); and
from the windup force signal (52) an instability-avoidance signal (54c); and

combining the first correction force contribution signal (54a), the second correction force contribution signal (54b) and the instability-avoidance signal (54c) to obtain the correction force (30).

5. Motor controller of claim 4, configured to

determine the first correction force contribution signal (54a) from the motor encoder signal (24) by use of a first filter,
determine the second correction force contribution signal (54b) from the effective correction force signal (50) by use of a second filter; and
determine the instability-avoidance signal (54c) from the windup force signal (52) by use of a third filter;
wherein the first filter, the second filter and the third filter are FIR filters, and wherein the first filter exceeds the first and second filters in filter kernel size.

6. Motor controller of claim 4 or 5, configured to

determine the first correction force contribution signal (54a) from the motor encoder signal (24) by use of a first filter,

wherein the first filter is a FIR filter, and designed so that

1) a predetermined FIR filter tap's coefficient (100) of the first filter equals a negative sum over all coefficients of the first filter except the predetermined FIR filter tap's coefficient (100) so that the sum over all coefficients of the first filter is zero, or deviates from the negative sum over all coefficients of the first filter except the predetermined FIR filter tap's coefficient (100) by an amount small enough so that an absolute of the sum over all coefficients of the first filter is smaller than 1% of an absolute of the, in magnitude, greatest coefficient among the coefficients of the first filter, and

2) a first moment of the coefficients of the first filter about the predetermined FIR filter tap is zero or an absolute of the first moment of the coefficients of the first filter about the predetermined FIR filter tap is smaller than 10% of an absolute of the, in magnitude, greatest coefficient among the coefficients of the first filter.

7. Motor controller of claim 6, wherein
the predetermined FIR filter tap is a zero-delay filter tap.

8. Motor controller of claim 7, wherein
a one-tap-delay FIR filter tap's coefficient (106) is set so as to correspond to minus the first moment of the coefficients of the first filter, except the one-tap-delay FIR filter tap's coefficient, about the predetermined FIR filter tap.

9. Motor controller of claim 8, wherein

a two-tap-delay FIR filter tap's coefficient (108) and the zero-delay FIR filter tap's coefficient (100) are of equal sign and opposite in sign relative to the one-tap-delay FIR filter tap's coefficient (106) with an absolute of a sum over the two-tap-delay FIR filter tap's coefficient (108), the zero-delay FIR filter tap's coefficient (100) and the one-tap-delay FIR filter tap's coefficient (106) being smaller than 10% of an absolute of the one-tap-delay FIR filter tap's coefficient (106), and

coefficients of the first filter, other than the two-tap-delay FIR filter tap's coefficient (108), the one-tap-delay FIR filter tap's coefficient (106) and the zero-delay FIR filter tap's coefficient, form a monotonic function, monotonically decreasing away from the two-tap-delay FIR filter tap's coefficient (108).

10. Motor controller of any of claims 5 to 9, wherein

coefficients of the first filter and the second filter are machine learned using a cost function which depends on at least one or more of
a measure for uncompensated collision energy,
a measure for temporal duration until the correction force vanishes,
a measure for current noise increase imposed by the correction force,
a measure of sensitivity against variations of mechanical design parameters,
a measure of robustness against Coulomb friction, and
a measure of robustness against motor encoder non-linearities.

11. Motor controller of any of claims 4 to 10, wherein
the correction force determiner (42) is configured to combine the first correction force contribution signal, the second correction force contribution signal and the instability-avoidance signal by forming a summation over the first correction force contribution signal, the second correction force contribution signal and the instability-avoidance signal.

12. Motor controller of any of claims 1 to 11, wherein
the force-to-current converter (40) is configured to determine the current to be applied onto the motor based on the effectively set force using a polynomial function in a force variable which depends on a motor temperature and the effectively set force.

13. Motor controller of any of claims 1 to 12, wherein the motor is a rotational electric motor, the shock-induced excess force is a shock-induced excess torque, the externally controlled force (22) is a externally controlled torque, the correction force (30) is a correction torque (30), the effectively set force (38) is a effectively set torque and the motor encoder signal is indicative of an angle of a position of a rotor of the motor.

14. Motor controller system for controlling a motor, comprising

a motor controller (10) for controlling the motor with compensation against shock-induced excess force depending on an externally controlled force (22) according to any of claims 1 to 13, and
a high-level controller configured to determine the externally controlled force based on an intended movement of an object moved by the motor.

15. Motorized System comprising

a motor (18), and
a motor controller (10) for controlling the motor with compensation against shock induced excess force according to any of claims 1 to 13 or a motor controller system according to claim 14.

16. Robot comprising

a leg or arm rotatable via a gear,
a motor for moving the leg or arm via the gear, and
a motor controller for controlling the motor with compensation against shock induced excess force onto the gear according to any of claims 1 to 13 or a motor controller system according to claim 14.

14 leg

16 gear

18 motor

$\varphi_{out}$

$\varphi_{mot}$

26

12

24

10

$I_{mot}$

28

40 converter

48

101

107

100

106

108

motor position FIR 48a

54a

102 103

correction compensation FIR 48b

$\tau_{corr}$ 56

54c

$\tau_{set,eff}$

38

$\tau_{corr,eff}$

50

44

36 torque limiter

34

$\tau_{set}$

32

46

$\tau_{windup}$

105

104

52

windup FIR 48c

30

42

22

$\tau_{PVT}$

20 PVT controller

$\varphi_{mot}$

$\varphi_{out}$

Fig. 1

Fig. 2

$\tau_{set,\,eff}$; TorqueCorrectedSetValue

Fig. 3a

$\varphi_{mot}$; motor encoder signal

Fig. 3b

TorqueCorrection1

Fig. 3c

23

$\tau_{corr,\,eff}$; EffectiveCorrection

**Fig. 3d**

TorqueCorrection2

**Fig. 3e**

$\tau_{windup}$; Torque Correction – Effective Correction

**Fig. 3f**

106

Fig. 3g

Fig. 3h

Europäisches
Patentamt
European
Patent Office
Office européen
des brevets

# EUROPEAN SEARCH REPORT

**Application Number**

EP 23 21 8976

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2021/323148 A1 (MATSUDA YASUHIRO [JP] ET AL) 21 October 2021 (2021-10-21) <br> * paragraph [0036] * <br> * paragraph [0061] - paragraph [0067]; figure 8 * <br> * paragraph [0005] * | 1,3, 12-16 | INV. <br> H02P6/08 <br> B25J9/00 <br> G05B1/00 |
| Y | US 2013/113408 A1 (LEE DONG HEE [KR] ET AL) 9 May 2013 (2013-05-09) <br> * paragraph [0002] * <br> * paragraph [0012] - paragraph [0013] * | 1,3, 13-16 | |
| Y | US 2023/188070 A1 (SATO YASUAKI [JP] ET AL) 15 June 2023 (2023-06-15) <br> * paragraph [0089] - paragraph [0090]; figure 6 * | 12 | |
| A | SAMI HADDADIN ET AL: "Robot Collisions: A Survey on Detection, Isolation, and Identification", <br> IEEE TRANSACTIONS ON ROBOTICS., <br> vol. 33, no. 6, <br> 1 December 2017 (2017-12-01), pages 1292-1312, XP055434488, <br> US <br> ISSN: 1552-3098, DOI: 10.1109/TRO.2017.2723903 <br> * page 1298 - page 1299 * | 1-16 | **TECHNICAL FIELDS SEARCHED (IPC)** <br><br> H02P <br> B25J <br> G05B |

The present search report has been drawn up for all claims

| Place of search | Date of completion of the search | Examiner |
|---|---|---|
| Munich | 4 June 2024 | Schürle, Patrick |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 21 8976

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2024

| Patent document cited in search report | | Publication date | Patent family member(s) | | Publication date |
|---|---|---|---|---|---|
| US 2021323148 | A1 | 21-10-2021 | CN | 112384341 A | 19-02-2021 |
| | | | EP | 3825077 A1 | 26-05-2021 |
| | | | JP | 7375754 B2 | 08-11-2023 |
| | | | JP WO2020017370 A1 | | 15-07-2021 |
| | | | US | 2021323148 A1 | 21-10-2021 |
| | | | WO | 2020017370 A1 | 23-01-2020 |
| US 2013113408 | A1 | 09-05-2013 | KR | 101220915 B1 | 14-02-2013 |
| | | | US | 2013113408 A1 | 09-05-2013 |
| US 2023188070 | A1 | 15-06-2023 | CN | 115516754 A | 23-12-2022 |
| | | | JP | 7481441 B2 | 10-05-2024 |
| | | | JP WO2021240883 A1 | | 02-12-2021 |
| | | | US | 2023188070 A1 | 15-06-2023 |
| | | | WO | 2021240883 A1 | 02-12-2021 |

EPO FORM P0459

For more details about this annex : see Official Journal of the European Patent Office, No. 12/82